(19) **Europäisches Patentamt European Patent Office Office européen des brevets**

(11) **EP 3 954 013 B1**

(12) **EUROPEAN PATENT SPECIFICATION**

(45) Date of publication and mention of the grant of the patent:
**16.07.2025 Bulletin 2025/29**

(21) Application number: **20718233.8**

(22) Date of filing: **02.04.2020**

(51) International Patent Classification (IPC):
*H02J 3/01* (2006.01)     *H02J 3/38* (2006.01)

(52) Cooperative Patent Classification (CPC):
**H02J 3/01; H02J 3/381;** H02J 2203/20;
H02J 2300/28; Y02E 10/76; Y02E 40/40;
Y02E 60/00; Y04S 40/20

(86) International application number:
**PCT/EP2020/059327**

(87) International publication number:
**WO 2020/229048 (19.11.2020 Gazette 2020/47)**

(54) **DETERMINING MODEL PARAMETER VALUES DESCRIBING HARMONIC BEHAVIOR OF WIND TURBINE GENERATORS**

BESTIMMUNG VON MODELLPARAMETERWERTEN ZUR BESCHREIBUNG VON HARMONISCHEM VERHALTEN VON WINDTURBINENGENERATOREN

DÉTERMINATION DES VALEURS DE PARAMÈTRES DE MODÈLES DE DÉCRIVANT LE COMPORTEMENT HARMONIQUE DE GÉNÉRATEURS DE TURBINE ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2019 EP 19173711**

(43) Date of publication of application:
**16.02.2022 Bulletin 2022/07**

(73) Proprietor: **Siemens Gamesa Renewable Energy A/S**
**7330 Brande (DK)**

(72) Inventors:
• **ADLOFF, Stephan**
**26629 Ostgroßefehn (DE)**
• **DREYER, Thomas**
**28832 Achim (DE)**
• **MALEKIAN BOROUJENI, Kaveh**
**09116 Chemnitz (DE)**
• **SAFARGHOLI, Farhad**
**09126 Chemnitz (DE)**

(74) Representative: **SGRE-Association**
**Siemens Energy Global GmbH & Co. KG**
**SE I IM P Intellectual Property**
**Siemenspromenade 9**
**91058 Erlangen (DE)**

(56) References cited:
**EP-A1- 3 361 272     EP-A1- 3 361 272**
**CN-A- 104 362 628     CN-A- 109 378 855**
**CN-A- 109 378 855     US-B1- 6 182 017**

• **MD. UMAR HASHMI ET AL: "Online Thevenin Equivalent Parameter Estimation using Nonlinear and Linear Recursive Least Square Algorithm", 20 July 2016 (2016-07-20), XP055330158, Retrieved from the Internet <URL:https://arxiv.org/ftp/arxiv/papers/1610/1610.05142.pdf>**
• **MD. UMAR HASHMI ET AL: "Online Thevenin Equivalent Parameter Estimation using Nonlinear and Linear Recursive Least Square Algorithm", 20 July 2016 (2016-07-20), XP055330158, Retrieved from the Internet <URL:https://arxiv.org/ftp/arxiv/papers/1610/1610.05142.pdf>**

- BORKOWSKI DARIUSZ: "Power system impedance tracking using sliding, finite memory complex recursive least squares", 2013 SIGNAL PROCESSING: ALGORITHMS, ARCHITECTURES, ARRANGEMENTS, AND APPLICATIONS (SPA), POZNAN UNIV OF TECHNOLOGY, 26 September 2013 (2013-09-26), pages 78 - 81, XP032550275, ISSN: 2326-0262, ISBN: 978-83-62065-31-8, [retrieved on 20140113]

- BABAK BADRZADEH ET AL: "Power system harmonic analysis in wind power plants Part I: Study methodology and techniques", INDUSTRY APPLICATIONS SOCIETY ANNUAL MEETING (IAS), 2012 IEEE, IEEE, 7 October 2012 (2012-10-07), pages 1 - 11, XP032278554, ISBN: 978-1-4673-0330-9, DOI: 10.1109/ IAS.2012.6374102

**Description**

Field of Invention

The present invention relates to the field of wind turbine generators, in particular to methods and systems for determining a source parameter value and an impedance parameter value for an electrical model of a wind turbine generator, wherein the electrical model is representative of a selected harmonic occurring during operation of the wind turbine generator.

Art Background

Harmonic oscillations in power grids, i.e. oscillations at multiples of the grid frequency, are a well-known problem. When connecting a wind turbine generator to a power grid, it is therefore desirable to know how the wind turbine generator may contribute and react to such oscillations.

There may thus be a need for a simple and efficient way of obtaining useful information on the harmonic behavior of a wind turbine generator.

Document CN104362628 discloses a method for determining a source parameter value and an impedance parameter value for an electrical model of a wind turbine generator according to the preamble of claim 1.

Summary of the Invention

This need may be met by the subject matter according to the independent claims. Advantageous embodiments of the present invention are described by the dependent claims.

According to a first aspect of the invention there is provided a method of determining a source parameter value and an impedance parameter value for an electrical model of a wind turbine generator, wherein the electrical model is representative of a selected harmonic occurring during operation of the wind turbine generator. The method comprises (a) obtaining a set of measured voltage values and a set of measured current values corresponding to the selected harmonic, (b) calculating an initial source parameter value and an initial impedance parameter value based on the set of measured voltage values and the set of measured current values, (c) calculating a respective fitting index for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial impedance parameter value divided by a second predetermined number, (d) selecting a subset of the candidate combinations for which the corresponding fitting index is maximal, and (e) determining the source parameter value and the impedance parameter value based on the selected subset of candidate combinations.

This aspect of the invention is based on the idea that for a selected harmonic (such as 1*f, 2*f, 3*f, 4*f, 5*f and so on, where f denotes the grid frequency), a set of model parameter values (source parameter value and impedance parameter value) is determined, which describes the electrical behavior of the wind turbine generator with regard to the selected harmonic. This is done by obtaining measured voltage and current values corresponding to the selected harmonic (e.g. by applying DFT (Discrete Fourier Transform) or FFT (Fast Fourier Transform) to raw measurement data). Based on these sets of measurement data, initial parameter values are calculated and then a fitting index is calculated for each of a plurality of candidate combinations of candidate source parameter values and candidate impedance values. The fitting index is indicative of how well a given candidate combination (and the corresponding electrical model) fits the measured reality. The candidate source parameter values are obtained as respective multiples of the initial source parameter values divided by a first predetermined number and the candidate impedance parameter values are obtained as respective multiples of the initial impedance parameter value divided by a second predetermined number. In other words, a matrix containing a fitting index for each candidate combination is formed. Then, the subset of candidate combinations having the maximal fitting index is identified and the (final) source parameter value and the (final) impedance parameter value are determined based on this subset. Thus, the candidate combinations with the maximum fitting index are used to determine the desired parameter values (source parameter value and impedance parameter value).

According to an embodiment of the invention, the set of measured voltage values and the set of measured current values are obtained during operation of the wind turbine generator while it is connected to a power grid.

In other words, the measurements are obtained during normal operation of the wind turbine generator while it is connected to the power grid. In order for the measurements to be representative of a wide variety of situations, the measurements should be collected over a substantive period of time, such as during a week or more of continuous operation.

The measurements are preferably obtained at a coupling point between the wind turbine generator and the power grid or at a point in the vicinity of this coupling point.

According to a further embodiment of the invention, the set of measured voltage values and the set of measured current values are obtained during operation of the wind turbine generator while it is connected to a power grid simulator.

The grid simulator is capable of electrically behaving like a power grid in a wide range of situations. This can in particular be utilized to obtain a wider variation in the collected data in a significantly shorter period of time as compared to the above embodiment which relies on a true power grid.

According to a further embodiment of the invention, the power grid simulator is operated to generate a plurality of harmonics at a coupling point between the wind turbine generator and the power grid simulator.

Thereby, it can be assured that sufficient measurement data representative of each harmonic of interest is actually available.

According to a further embodiment of the invention, the electrical model is a Thevenin equivalent circuit, the source parameter value is a Thevenin generator voltage, and the impedance parameter value is a Thevenin series impedance.

In other words, the electrical model consists of an ideal (alternating) voltage generator coupled in series with an impedance. The frequency of the voltage generator is a multiple of the grid frequency (e.g. 50 Hz, 100 Hz, 150 Hz, etc.).

According to a further embodiment of the invention, the initial source parameter value is calculated as a median value of the set of measured voltage values, and the initial impedance parameter value is calculated as the sum of all measured voltage values in the set of measured voltage values divided by the sum of all measured current values in the set of measured current values.

According to a further embodiment of the invention, the electrical model is a Norton equivalent circuit, the source parameter value is a Norton generator current, and the impedance parameter value is a Norton parallel impedance.

In other words, the electrical model consists of an ideal (alternating) current generator coupled in parallel with an impedance. The frequency of the voltage generator is a multiple of the grid frequency (e.g. 50 Hz, 100 Hz, 150 Hz, etc.).

According to a further embodiment of the invention, the fitting index is indicative of how well the corresponding candidate combination fits the obtained sets of measured voltage values and measured current values.

The fitting index may preferably be a number between 0 and 1, where a fitting index equal to 0 indicates no or a very bad fit while a fitting index equal to 1 indicates a perfect or very good fit.

According to a further embodiment of the invention, determining the source parameter value comprises (a) determining a minimum source parameter value and a maximum source parameter value in the selected subset of candidate combinations, and (b) determining the source parameter value as a mean value of the minimum source parameter value and the maximum source parameter value.

According to a further embodiment of the invention, determining the impedance parameter value comprises (a) determining a minimum impedance parameter value and a maximum impedance parameter value in the selected subset of candidate combinations, and (b) determining the impedance parameter value as a mean value of the minimum impedance parameter value and the maximum impedance parameter value.

According to a second aspect of the invention there is provided a system for determining a source parameter value and an impedance parameter value for an electrical model of a wind turbine generator, wherein the electrical model is representative of a selected harmonic occurring during operation of the wind turbine generator. The system comprises (a) a measurement unit configured to obtain a set of measured voltage values and a set of measured current values corresponding to the selected harmonic, and (b) a processing unit configured to (b1) calculate an initial source parameter value and an initial impedance parameter value based on the set of measured voltage values and the set of measured current values, (b2) calculate a respective fitting index for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial impedance parameter value divided by a second predetermined number, (b3) select a subset of the candidate combinations for which the corresponding fitting index is maximal, and (b4) determine the source parameter value and the impedance parameter value based on the selected subset of candidate combinations.

This aspect of the invention is essentially based on the same idea as the first aspect described above.

According to a third aspect of the invention, there is provided a computer program comprising computer executable instructions which, when executed by a computer processor, are adapted to cause the processor to perform the method according to the first aspect or any of the embodiments thereof.

It is noted that embodiments of the invention have been described with reference to different subject matters. In particular, some embodiments have been described with reference to method type claims whereas other embodiments have been described with reference to apparatus type claims.

The aspects defined above and further aspects of the present invention are apparent from the examples of embodiments to be described hereinafter and are explained with reference to the examples of embodiments. The invention will be described in more detail hereinafter with reference to examples of embodiments.

Brief Description of the Drawing

Figure 1 shows an electrical model utilized in embodiments of the present invention.
Figure 2 shows another electrical model utilized in embodiments of the present invention.
Figure 3 shows a flowchart of a method according to an embodiment of the present invention.
Figure 4 shows a flowchart of a part of the method shown in Figure **3.**
Figure 5 shows a flowchart of another part of the method shown in Figure **3.**
Figure 6 shows a flowchart of yet another part of the method shown in Figure **3.**
Figure 7 shows a plot of measured harmonic voltages and currents in accordance with an embodiment of the present invention.
Figure 8 shows a plot of measured harmonic voltages and currents in accordance with another embodiment of the present invention.

Detailed Description

The illustration in the drawing is schematic. It is noted that in different figures, similar or identical elements are provided with the same reference numerals or with reference numerals which differ only within the first digit.

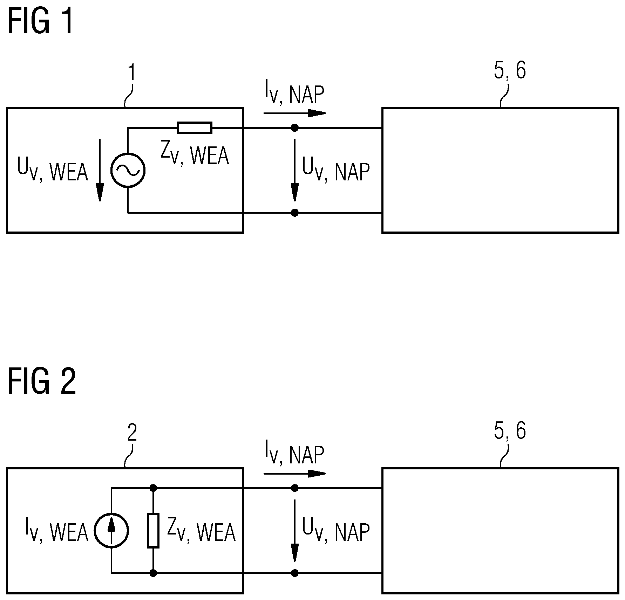

Figure 1 shows an electrical model 1 utilized in embodiments of the present invention. The electrical model 1 is a Thevenin equivalent circuit of a wind turbine generator and comprises a voltage generator in series with an impedance $Z_{v,WEA}$. The voltage generator provides an alternating voltage with magnitude $U_{v,WEA}$ and frequency corresponding to a selected v-th harmonic of a grid frequency (e.g. v*50Hz, v = 1, 2, 3,...). The wind turbine generator represented by the model 1 is coupled to a power grid 5 or a power grid simulator 6. At the point of interconnection between the wind turbine generator represented by the model 1 and the power grid 5 or power grid simulator 6, a voltage $U_{v,NAP}$ and current $I_{v,NAP}$ corresponding to the v-th harmonic are measured, e.g. by applying FFT or DFT to corresponding raw measurement signals.

Figure 2 shows another electrical model 2 utilized in embodiments of the present invention. The electrical model 2 is a Norton equivalent circuit of a wind turbine generator and comprises a current generator in parallel with an impedance $Z_{v,WEA}$. The current generator provides an alternating current with magnitude $I_{v,WEA}$ and frequency corresponding to a selected v-th harmonic of a grid frequency (e.g. v*50Hz, v = 1, 2, **3,...).** Like in Figure 1, the wind turbine generator represented by the model 2 is coupled to a power grid 5 or a power grid simulator 6. At the point of interconnection between the wind turbine generator represented by the model 2 and the power grid 5 or power grid simulator 6, a voltage $U_{v,NAP}$ and current $I_{v,NAP}$ corresponding to the v-th harmonic are measured, e.g. by applying FFT or DFT to corresponding raw measurement signals.

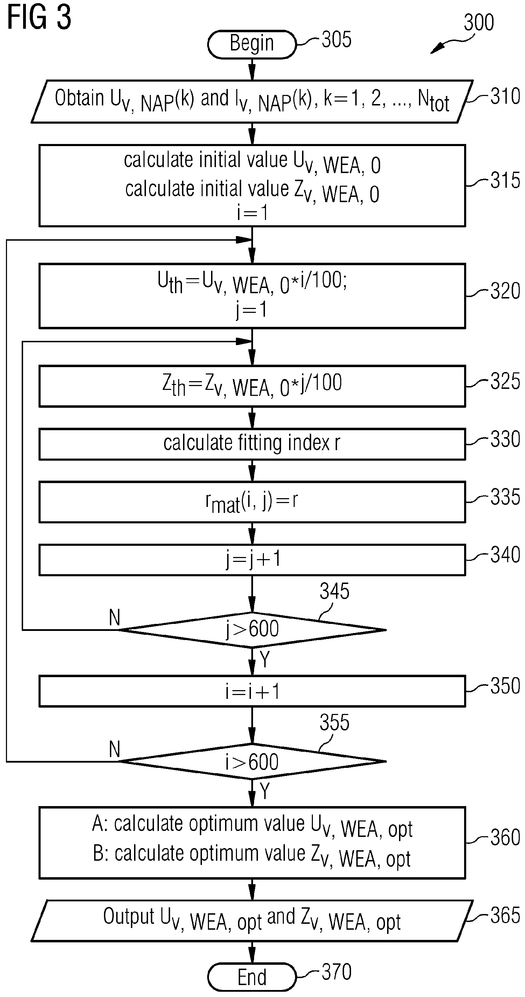

Figure 3 shows a flowchart of a method 300 according to an embodiment of the present invention, more specifically a method 300 of determining a source parameter value $U_{v,WEA}$ and an impedance parameter value $Z_{v,WEA}$ for an electrical model 1 (see Figure 1) of a wind turbine generator, wherein the electrical model is representative of a selected harmonic occurring during operation of the wind turbine generator. In other words, the method aims at determining the source parameter value $U_{v,WEA}$ and impedance parameter value $Z_{v,WEA}$ for a given v-th harmonic.

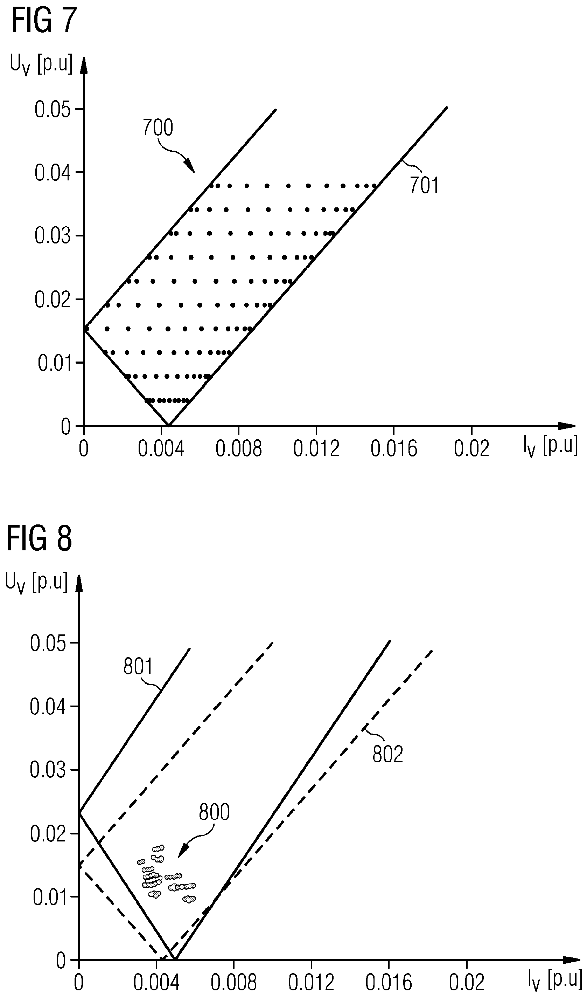

The method 300 begins at 305 and continues at 310 with **ob**taining a set of measured voltage values $U_{v,NAP}(k)$ and a set of measured current values $I_{v,NAP}(k)$ corresponding to the selected harmonic. The index k has integer values between 1 and $N_{tot}$. The measured values may be obtained over a longer period of time while the wind turbine generator is connected to a power grid 5 or during a (possibly) shorter period of time while the wind turbine generator is connected a power grid simulator **6.** This will be discussed in more detail below in conjunction with Figures 7 and **8.** In any event, the obtained measurement values represent a variety of voltages and currents associated with the selected v-th harmonic of the grid frequency.

Then, an initial source parameter value $U_{v,WEA,0}$ and an initial impedance parameter value $Z_{v,WEA,0}$ based on the set of measured voltage values and the set of measured current values are calculated at 315. Here, a first index i is set to one, **i.e.** i = 1. The initial values are starting points for the algorithm and may in particular be calculated as follows:

$$U_{v,WEA,0} = Median\{U_{v,NAP}(1), U_{v,NAP}(2), ..., U_{v,NAP}(N_{tot})\}$$

$$Z_{v,WEA,0} = \frac{\sum_{k=1}^{N_{tot}} U_{v,NAP}(k)}{\sum_{k=1}^{N_{tot}} I_{v,NAP}(k)}$$

At 320, a candidate source parameter value $U_{th}$ is calculated as

$$U_{th} = U_{v,WEA,0} \cdot i/100$$

and a second index j is set to one, i.e. j = 1.

At 325, a candidate impedance value $Z_{th}$ is calculated as

$$Z_{th} = Z_{v,WEA,0} \cdot j/100.$$

Then, at 330 a fitting index r is calculated for the combination of candidate values $U_{th}$ and $Z_{th}$. The fitting index is preferably a value between 0 (zero) and 1 (one), where a larger value indicates that the combination of candidate values fits the measurements better while a smaller value indicates that the combination of candidate values fits the measurements worse. The calculation of the fitting index r will be discussed in more detail below in conjunction with Fig-ure 4.

At 335, the calculated fitting index r is stored in a matrix $r_{mat}$ at a position corresponding to row i (i=1) and column j (j=1), and then j is incremented by one (j = j + 1) at 340.

At 345, it is determined whether j > 600 and as long as this is not the case, the method returns to 325 and repeats the inner loop, i.e. steps 325, 330, 335, 340, and 345 for each incremented value of j and the corresponding new candidate impedance parameter value $Z_{th}$ calculated at 325.

When it is determined at 345 that j > 600 (i.e. j = 601), the method continues to 350 where the first index i is incremented by one (i = i + 1).

Then, at 355, it is determined whether i > 600 and as long as this is not the case, the method returns back to 320 and repeats the inner loop (i.e. steps 325, 330, 335, 340, and 345) for the corresponding new candidate source parameter value $U_{th}$ calculated at 320.

When it is determined at 355 that i > 600 (i.e. i = 601), the method continues to 360. At this stage, a 600 x 600 matrix $r_{mat}$ has been established by calculating a respective fitting index r for each of a plurality of candidate combinations of respective candidate source parameter values $U_{th}$ and candidate impedance parameter values $Z_{th}$, wherein each candidate source parameter value is obtained as a multiple of the initial source parameter value divided by a first predetermined number (i.e. $U_{th} = U_{v,WEA,0} \cdot i/100$) and each candidate impedance parameter value is obtained as a multiple of the initial source parameter value divided by a second predetermined number (i.e. $Z_{th} = Z_{v,WEA,0} \cdot j/100$). Here, both the first and second predetermined number is equal to 100.

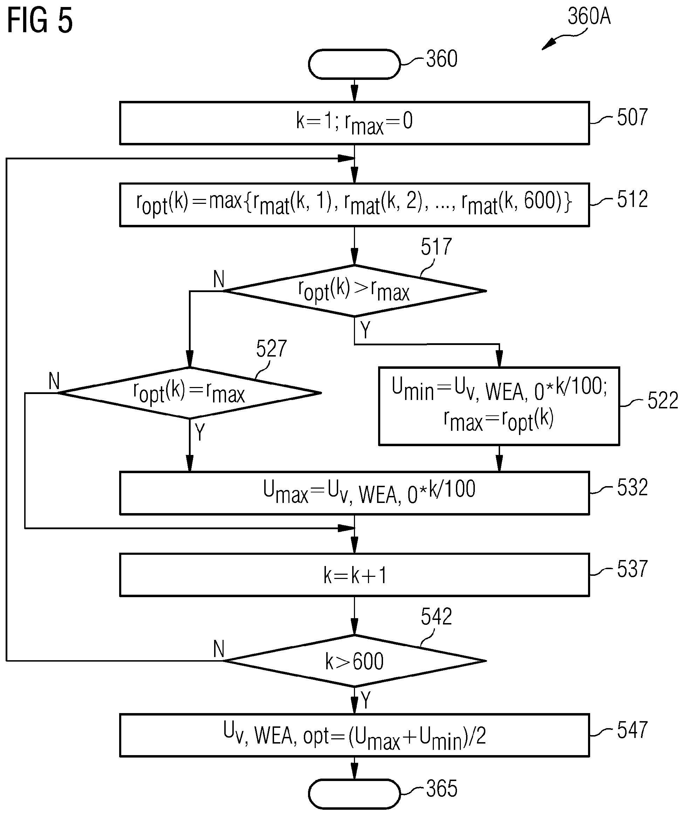

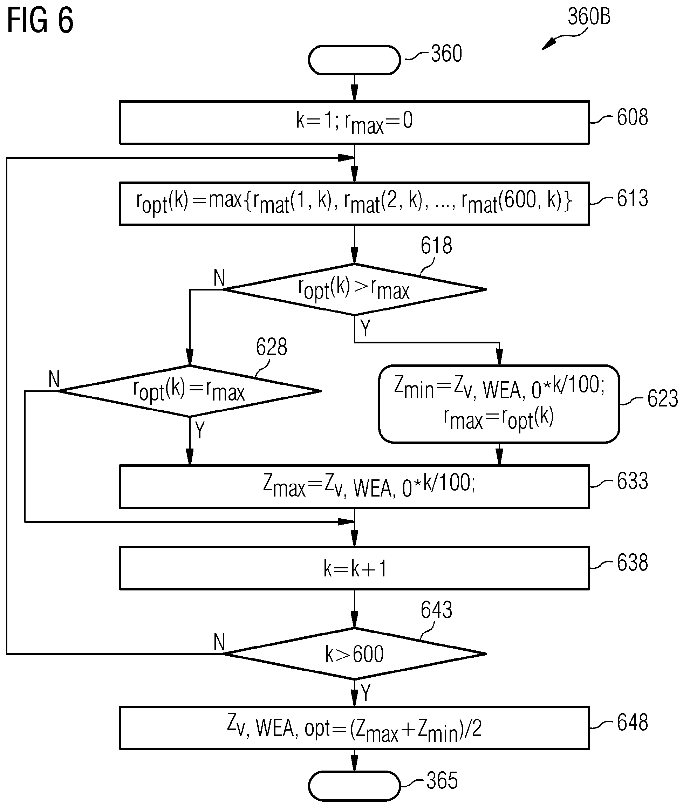

At 360, optimum values $U_{v,WEA,opt}$ and $Z_{v,WEA,opt}$ calculated by selecting a subset of the candidate combinations for which the corresponding fitting index r is maximal, and determining the source parameter value $U_{v,WEA,opt}$ and the impedance parameter value $Z_{v,WEA,opt}$ based on the selected subset of candidate combinations. More specifically, this is done by applying the algorithm 360A shown in Figure 5 and the algorithm 360B shown in Figure 6 to the matrix $r_{mat}$ as will be discussed in more detail further below.

Having obtained the optimum parameter values $U_{v,WEA,opt}$ and $Z_{v,WEA,opt}$, the method 300 continues to 365 where the optimum parameter values are output before the method ends at 370.

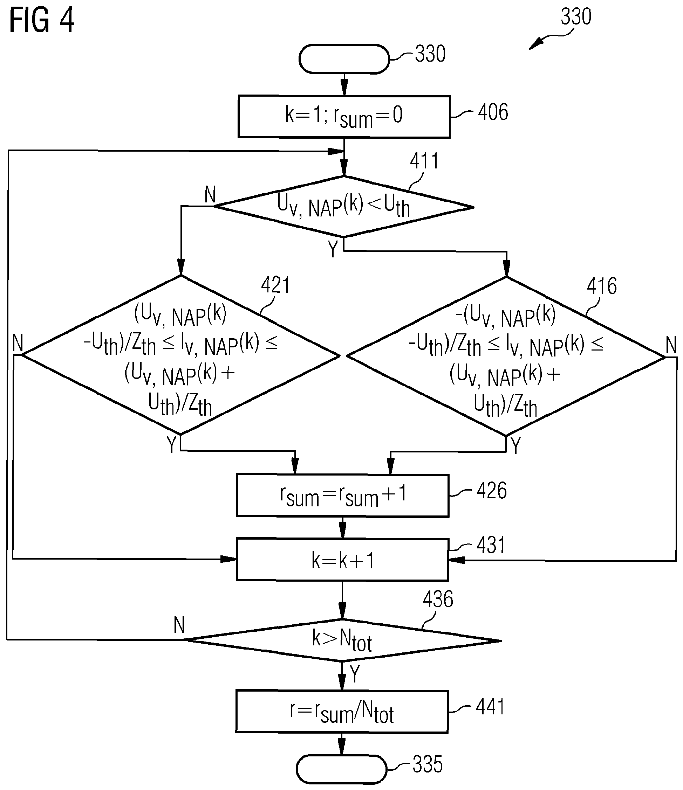

Figure 4 shows a flowchart of a part of the method 300 shown in Figure 3. More specifically, Figure 4 shows the calculating 330 of the fitting index r for a given candidate combination of $U_{th}$ and $Z_{th}$. The calculating process 330 begins at 405 where the measurement index k is set to one (k = 1) and the value $r_{sum}$ is set to zero ($r_{sum}$ = 0). Then, at 411, it is determined whether the k-th voltage measurement value $U_{v,NAP}(k)$ is less than the candidate voltage value $U_{th}$, i.e. whether $U_{v,NAP}(k) < U_{th}$. If that is the case, the process continues to 416, otherwise it continues to 421.

At 416, it is determined whether

$$- \left( U_{v,NAP}(k) - U_{th} \right)/Z_{th} \leq I_{v,NAP}(k) \leq \left( U_{v,NAP}(k) + U_{th} \right)/Z_{th}.$$

If this is the case, the process continues to 426 where $r_{sum}$ is incremented by one (i.e. $r_{sum} = r_{sum} + 1$) and then to 431 where k is incremented by one (i.e. k = k + 1). If not, the process goes directly to 431 without incrementing $r_{sum}$.

Similarly at 421, it is determined whether

$$\left( U_{v,NAP}(k) - U_{th} \right)/Z_{th} \leq I_{v,NAP}(k) \leq \left( U_{v,NAP}(k) + U_{th} \right)/Z_{th}.$$

Again, if this is the case, the process continues to 426 where $r_{sum}$ is incremented by one (i.e. $r_{sum} = r_{sum} + 1$) and then to 431 where k is incremented by one (i.e. k = k + 1). If not, the process goes directly to 431 without incrementing $r_{sum}$.

Thereafter, it is determined at 436 whether all measurement values have been used, i.e. whether k > $N_{tot}$. If this is not case, the process returns to 411 and repeats the steps 411, 416/421, 426, 431, and 436. Otherwise, it proceeds to 441 and calculates the fitting index r as $r = r_{sum}/N_{tot}$ before the method 300 continues at 335 as discussed above in conjunction with Figure 3.

Figure 5 shows a flowchart of another part of the method 300 shown in Figure 3. More specifically, Figure 5 shows the process 360A of calculating the optimum source parameter value $U_{v,WEA,opt}$. The process begins at 507 where the index k is set to one (k = 1) and the value $r_{max}$ is set to zero ($r_{max} = 0$). Then, at 512, the optimum fitting index r for the k-th row (i.e. in this case the first row) in the matrix $r_{mat}$ is found as

$$r_{opt}(k) = max\{r_{mat}(k, 1), r_{mat}(k, 2), ..., r_{mat}(k, 600)\}.$$

Then, at 517, it is determined whether $r_{opt}(k)$ is larger than $r_{max}$, i.e. whether $r_{opt}(k) > r_{max}$. If this is the case, the process continues to 522 where $U_{min}$ is set equal to $U_{v,WEA,0}*k/100$ and $r_{max}$ is set equal to $r_{opt}(k)$ before the process continues to 532. Otherwise, the process continues to 527 where it is determined whether $r_{opt}(k)$ is equal to $r_{max}$. If this is the case, the process continues to 532 where $U_{max}$ is set equal to $U_{v,WEA,0}*k/100$. If not, 532 is skipped and the process continues at 537 by incrementing k by one (i.e. k = k + 1).

Then, at 542, it is determined whether k exceeds 600, i.e. whether k > 600. If not, the process returns to 512 and repeats the steps 512, 517, 522, 527, 532, 537 and 542 as described above. Otherwise, the process continues to 547 where the optimum source parameter values $U_{v,WEA,opt}$ is determined as the middle value of $U_{max}$ and $U_{min}$, i.e. as

$$U_{v,WEA,opt} = (U_{max} + U_{min})/2$$

before the method 300 continues at 365 as discussed above in conjunction with Figure 3.

Figure 6 shows a flowchart of yet another part of the method 300 shown in Figure 3. More specifically, Figure 6 shows the process 360B of calculating the optimum impedance parameter value $Z_{v,WEA,opt}$. The process begins at 608 where the index k is set to one (k = 1) and the value $r_{max}$ is set to zero ($r_{max} = 0$). Then, at 613, the optimum fitting index r for the k-th column (i.e. in this case the first column) in the matrix $r_{mat}$ is found as

$$r_{opt}(k) = max\{r_{mat}(1, k), r_{mat}(2, k), ..., r_{mat}(600, k)\}.$$

Then, at 618, it is determined whether $r_{opt}(k)$ is larger than $r_{max}$, i.e. whether $r_{opt}(k) > r_{max}$. If this is the case, the process continues to 623 where $Z_{min}$ is set equal to $Z_{v,WEA,0}*k/100$ and $r_{max}$ is set equal to $r_{opt}(k)$ before the process continues to 633. Otherwise, the process continues to 628 where it is determined whether $r_{opt}(k)$ is equal to $r_{max}$. If this is the case, the process continues to 633 where $Z_{max}$ is set equal to $Z_{v,WEA,0}*k/100$. If not, 633 is skipped and the process continues at 638 by incrementing k by one (i.e. k = k + 1).

Then, at 643, it is determined whether k exceeds 600, i.e. whether k > 600. If not, the process returns to 613 and repeats the steps 613, 618, 623, 628, 633, 638 and 643 as described above. Otherwise, the process continues to 648 where the optimum impedance parameter value $Z_{v,WEA,opt}$ is determined as the middle value of $Z_{max}$ and $Z_{min}$, i.e. as

$$Z_{v,WEA,opt} = (Z_{max} + Z_{min})/2$$

before the method 300 continues at 365 as discussed above in conjunction with Figure 3.

The processes 360A and 360B are preferably performed in parallel.

As can be seen from the above discussion of Figure 5 and Fig-ure 6, a subset of candidate combinations (i.e. combinations of candidate source parameter values and impedance parameter values) for which the corresponding fitting index is maximal is selected by going through the matrix $r_{mat}$. Thereafter, the optimum source parameter value and the optimum impedance parameter value are determining based on the selected subset, in the present embodiment as the mean value of the maximum and minimum values in the subset.

An important aspect of the present invention is that the corresponding method relies on measured voltage and current values corresponding to the selected harmonic. Thus, the quality of the determined parameter values evidently depends on the quality of the measurement data which can generally be obtained in one of two ways: either during normal operation of the wind turbine generator while it is connected to the power grid or during operation of the wind turbine generator while it is connected to a power grid simulator. In the first case, measurements must be made during an extensive period of time in order to obtain data corresponding to a wide variety of operating conditions and power grid events. In the second case, the diversity of the measurement data may be assured by corresponding programming of the power grid simulator such that the desired conditions and events are sufficiently represented. This takes much less time and generally leads to a more precise determination of the model parameters as shown in the following.

Figure 7 shows a plot of measured harmonic voltages $U_v$ and currents $I_v$ in accordance with an embodiment of the present invention where the wind turbine generator is connected to a power grid simulator 6 (see Figure 1 and Figure 2). As can be seen, the measurement values 700 fit very well into a rectangle 701. Accordingly, there is a clear distinction between combinations of harmonic current and voltage that fit and do not fit the model (represented by the rectangle 701). This illustrates the point already made above, namely that a very precise model (source parameter value and impedance parameter value) can be obtained in this case.

As a contrast, Figure 8 shows a plot of measured harmonic voltages $U_v$ and currents $I_v$ in accordance with another embodiment of the present invention where the wind turbine is connected to a power grid 5 (see Figure 1 and Figure 2) during normal operation. In this case, the obtained measurement values 800 cover a much smaller area in the graph and both rectangles 801 and 802 appear to surround them quite well. Thus, in this case it is more difficult to obtain a precise model (source parameter value and impedance parameter value) than in the case discussed above in conjunction with Figure 7.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of determining a source parameter value ($U_{v,WEA}$, $I_{v,WEA}$) and an impedance parameter value ($Z_{v,WEA}$) for an electrical model (1, 2) of a wind turbine generator, wherein the electrical model is representative of a selected harmonic occurring during operation of the wind turbine generator, **characterised in that** the method comprising

   obtaining (310) a set of measured voltage values ($U_{v,NAP}$) and a set of measured current values ($I_{v,NAP}$) corresponding to the selected harmonic,
   calculating (315) an initial source parameter value ($U_{v,WEA,0}$) and an initial impedance parameter value ($Z_{v,WEA,0}$) based on the set of measured voltage values and the set of measured current values,
   calculating (330) a respective fitting index (r) for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial impedance parameter value divided by a second predetermined number,
   selecting a subset of the candidate combinations for which the corresponding fitting index is maximal, and
   determining (360) the source parameter value ($U_{v,WEA,opt}$) and the impedance parameter value ($Z_{v,WEA,opt}$) based on the selected subset of candidate combinations.

2. The method according to the preceding claim, wherein the set of measured voltage values and the set of measured current values are obtained during operation of the wind turbine generator while it is connected to a power grid (5).

3. The method according to claim 1, wherein the set of measured voltage values and the set of measured current values are obtained during operation of the wind turbine generator while it is connected to a power grid simulator (6).

4. The method according to the preceding claim, wherein the power grid simulator is operated to generate a plurality of harmonics at a coupling point between the wind turbine generator and the power grid simulator.

5. The method according to any of the preceding claims, wherein the electrical model is a Thevenin equivalent circuit (1), the source parameter value is a Thevenin generator voltage ($U_{v,WEA}$), and the impedance parameter value is a Thevenin series impedance ($Z_{v,WEA}$).

6. The method according to the preceding claim, wherein the initial source parameter value is calculated as a median value of the set of measured voltage values, and wherein the initial impedance parameter value is calculated as the sum of all measured voltage values in the set of measured voltage values divided by the sum of all measured current values in the set of measured current values.

7. The method according to any of claims 1 to 4, wherein the electrical model is a Norton equivalent circuit (2), the source parameter value is a Norton generator current ($I_{v,WEA}$), and the impedance parameter value is a Norton parallel impedance ($Z_{v,WEA}$).

8. The method according to any of the preceding claims, wherein the fitting index is indicative of how well the corresponding candidate combination fits the obtained sets of measured voltage values and measured current values.

9. The method according to any of the preceding claims, wherein determining the source parameter value comprises

determining a minimum source parameter value ($U_{min}$) and a maximum source parameter value ($U_{max}$) in the selected subset of candidate combinations, and
determining the source parameter value as a mean value of the minimum source parameter value and the maximum source parameter value.

10. The method according to any of the preceding claims, wherein determining the impedance parameter value comprises

determining a minimum impedance parameter value ($Z_{max}$) and a maximum impedance parameter value ($Z_{max}$) in the selected subset of candidate combinations, and
determining the impedance parameter value as a mean value of the minimum impedance parameter value and the maximum impedance parameter value.

11. A system for determining a source parameter value ($U_{v,WEA}$, $I_{v,WEA}$) and an impedance parameter value ($Z_{v,WEA}$) for an electrical model (1, 2) of a wind turbine generator, wherein the electrical model is representative of a selected harmonic occurring during operation of the wind turbine generator, **characterised in that** the system comprising

a measurement unit configured to obtain a set of measured voltage values ($U_{v,NAP}$) and a set of measured current values ($I_{v,NAP}$) corresponding to the selected harmonic, and
a processing unit configured to
calculate an initial source parameter value ($U_{v,WEA,0}$) and an initial impedance parameter value ($Z_{v,WEA,0}$) based on the set of measured voltage values and the set of measured current values,
calculate a respective fitting index (r) for each of a plurality of candidate combinations of respective candidate source parameter values and candidate impedance parameter values, wherein each candidate source parameter value is obtained as a multiple of the initial source parameter value divided by a first predetermined number and each candidate impedance parameter value is obtained as a multiple of the initial impedance parameter value divided by a second predetermined number,
select a subset of the candidate combinations for which the corresponding fitting index is maximal, and
determine the source parameter value ($U_{v,WEA,opt}$) and the impedance parameter value ($Z_{v,WEA,opt}$) based on the selected subset of candidate combinations.

12. A computer program comprising computer executable instructions which, when executed by a computer processor, are adapted to cause the processor to perform the method according to any of claims 1 to 10.

## Patentansprüche

1. Verfahren zum Bestimmen eines Quellparameterwerts ($U_{v,WEA}$, $I_{v,WEA}$) und eines Impedanzparameterwerts ($Z_{v,WEA}$) für ein elektrisches Modell (1, 2) eines Windkraftanlagengenerators, wobei das elektrische Modell eine ausgewählte Oberschwingung darstellt, die während des Betriebs des Windkraftanlagengenerators auftritt, **dadurch gekennzeichnet, dass** das Verfahren Folgendes umfasst

Erhalten (310) eines Satzes gemessener Spannungswerte ($U_{v,NAP}$) und eines Satzes gemessener Stromstärkewerte ($I_{v,NAP}$), die zur ausgewählten Oberschwingung gehören,
Berechnen (315) eines anfänglichen Quellparameterwerts ($U_{v,WEA,0}$) und eines anfänglichen Impedanzparameterwerts ($Z_{v,WEA,0}$) basierend auf dem Satz gemessener Spannungswerte und dem Satz gemessener Stromstärkewerte,
Berechnen (330) eines jeweiligen Passindex (r) für jede von mehreren Kandidatenkombinationen jeweiliger Kandidatenquellparameterwerte und Kandidatenimpedanzparameterwerte, wobei jeder Kandidatenquellparameterwert als Vielfaches des anfänglichen Quellparameterwerts geteilt durch eine erste festgelegte Zahl erhalten wird und jeder Kandidatenimpedanzparameterwert als Vielfaches des anfänglichen Impedanzparameterwerts geteilt durch eine zweite festgelegte Zahl erhalten wird,
Auswählen eines Teilsatzes der Kandidatenkombinationen, bei denen der zugehörige Passindex maximal ist, und

Bestimmen (360) des Quellparameterwerts ($U_{v,WEA,opt}$) und des Impedanzparameterwerts ($Z_{v,WEA,opt}$) basierend auf dem ausgewählten Teilsatz der Kandidatenkombinationen.

2. Verfahren nach dem vorhergehenden Anspruch, wobei der Satz gemessener Spannungswerte und der Satz gemessener Stromstärkewerte während des Betriebs des Windkraftanlagengenerators erhalten werden, während dieser mit einem Stromnetz (5) verbunden ist.

3. Verfahren nach Anspruch 1, wobei der Satz gemessener Spannungswerte und der Satz gemessener Stromstärkewerte während des Betriebs des Windkraftanlagengenerators erhalten werden, während dieser mit einem Stromnetzsimulator (6) verbunden ist.

4. Verfahren nach dem vorhergehenden Anspruch, wobei der Stromnetzsimulator dazu betrieben wird, an einem Kupplungspunkt zwischen dem Windkraftanlagengenerator und dem Stromnetzsimulator mehrere Oberschwingungen zu erzeugen.

5. Verfahren nach einem der vorhergehenden Ansprüche, wobei das elektrische Modell ein Thévenin-Äquivalent-Schaltkreis (1) ist, wobei der Quellparameterwert eine Thévenin-Generatorspannung ($U_{v,WEA}$) ist und der Impedanzparameterwert eine Thévenin-Reihenimpedanz ($Z_{v,WEA}$) ist.

6. Verfahren nach dem vorhergehenden Anspruch, wobei der anfängliche Quellparameterwert als Medianwert des Satzes gemessener Spannungswerte berechnet wird und wobei der anfängliche Impedanzparameterwert als Summe aller gemessener Spannungswerte des Satzes gemessener Spannungswerte geteilt durch die Summe aller gemessenen Stromstärkewerte des Satzes gemessener Stromstärkewerte berechnet wird.

7. Verfahren nach einem der Ansprüche 1 bis 4, wobei das elektrische Modell ein Norton-Äquivalent-Schaltkreis (2) ist, wobei der Quellparameterwert eine Norton-Generatorstromstärke ($I_{v,WEA}$) ist und der Impedanzparameterwert eine Norton-Parallelimpedanz ($Z_{v,WEA}$) ist.

8. Verfahren nach einem der vorhergehenden Ansprüche, wobei der Passindex anzeigt, wie gut die zugehörige Kandidatenkombination zu den erhaltenen Sätzen gemessener Spannungswerte und gemessener Stromstärkewerte passt.

9. Verfahren nach einem der vorhergehenden Ansprüche, wobei das Bestimmen des Quellparameterwerts Folgendes umfasst:

Bestimmen eines minimalen Quellparameterwerts ($U_{min}$) und eines maximalen Quellparameterwerts ($U_{max}$) in dem ausgewählten Teilsatz der Kandidatenkombinationen und
Bestimmen des Quellparameterwerts als Mittelwert des minimalen Quellparameterwerts und des maximalen Quellparameterwerts.

10. Verfahren nach einem der vorhergehenden Ansprüche, wobei das Bestimmen des Impedanzparameterwerts Folgendes umfasst:

Bestimmen eines minimalen Impedanzparameterwerts ($Z_{max}$) und eines maximalen Impedanzparameterwerts ($Z_{max}$) in dem ausgewählten Teilsatz der Kandidatenkombinationen und
Bestimmen des Impedanzparameterwerts als Mittelwert des minimalen Impedanzparameterwerts und des maximalen Impedanzparameterwerts.

11. System zum Bestimmen eines Quellparameterwerts ($U_{v,WEA}$, $I_{v,WEA}$) und eines Impedanzparameterwerts ($Z_{v,WEA}$) für ein elektrisches Modell (1, 2) eines Windkraftanlagengenerators, wobei das elektrische Modell eine ausgewählte Oberschwingung darstellt, die während des Betriebs des Windkraftanlagengenerators auftritt, **dadurch gekennzeichnet, dass** das System Folgendes umfasst

eine Messeinheit, die dazu ausgelegt ist, einen Satz gemessener Spannungswerte ($U_{v,NAP}$) und einen Satz gemessener Stromstärkewerte ($I_{v,NAP}$), die zur ausgewählten Oberschwingung gehören, zu erhalten, und
eine Verarbeitungseinheit, die dazu ausgelegt ist,
einen anfänglichen Quellparameterwert ($U_{v,WEA,0}$) und einen anfänglichen Impedanzparameterwert ($Z_{v,WEA,0}$)

basierend auf dem Satz gemessener Spannungswerte und dem Satz gemessener Stromstärkewerte zu berechnen,

einen jeweiligen Passindex (r) für jede von mehreren Kandidatenkombinationen jeweiliger Kandidatenquellparameterwerte und Kandidatenimpedanzparameterwerte zu berechnen, wobei jeder Kandidatenquellparameterwert als Vielfaches des anfänglichen Quellparameterwerts geteilt durch eine erste festgelegte Zahl erhalten wird und jeder Kandidatenimpedanzparameterwert als Vielfaches des anfänglichen Impedanzparameterwerts geteilt durch eine zweite festgelegte Zahl erhalten wird,

einen Teilsatz der Kandidatenkombinationen, bei denen der zugehörige Passindex maximal ist, auszuwählen und

den Quellparameterwert ($U_{v,WEA,opt}$) und den Impedanzparameterwert ($Z_{v,WEA,opt}$) basierend auf dem ausgewählten Teilsatz der Kandidatenkombinationen zu bestimmen.

**12.** Computerprogramm, das computerausführbare Anweisungen umfasst, die bei Ausführung durch einen Computerprozessor dazu eingerichtet sind, zu bewirken, dass der Prozessor das Verfahren nach einem der Ansprüche 1 bis 10 durchführt.

## Revendications

**1.** Procédé de détermination d'une valeur de paramètre de source ($U_{v,WEA}$, $I_{v,WEA}$) et d'une valeur de paramètre d'impédance ($Z_{v,WEA}$) pour un modèle électrique (1, 2) d'un générateur d'éolienne, dans lequel le modèle électrique est représentatif d'une harmonique sélectionnée apparaissant pendant un fonctionnement du générateur d'éolienne, **caractérisé en ce que** le procédé comprend

l'obtention (310) d'un ensemble de valeurs de tension mesurées ($U_{v,NAP}$) et d'un ensemble de valeurs de courant mesurées ($I_{v,NAP}$) correspondant à l'harmonique sélectionnée,

le calcul (315) d'une valeur initiale de paramètre de source ($U_{v,WEA,0}$) et d'une valeur initiale de paramètre d'impédance ($Z_{v,WEA,0}$) sur la base de l'ensemble de valeurs de tension mesurées et de l'ensemble de valeurs de courant mesurées,

le calcul (330) d'un indice d'ajustement (r) respectif pour chacune d'une pluralité de combinaisons candidates de valeurs candidates de paramètre de source et de valeurs candidates de paramètre d'impédance respectives, dans lequel chaque valeur candidate de paramètre de source est obtenue comme un multiple de la valeur initiale de paramètre de source divisé par un premier nombre prédéterminé et chaque valeur candidate de paramètre d'impédance est obtenue comme un multiple de la valeur initiale de paramètre d'impédance divisé par un second nombre prédéterminé,

la sélection d'un sous-ensemble des combinaisons candidates pour lesquelles l'indice d'ajustement correspondant est maximal, et

la détermination (360) de la valeur de paramètre de source ($U_{v,WEA,opt}$) et de la valeur de paramètre d'impédance ($Z_{v,WEA,opt}$) sur la base du sous-ensemble sélectionné de combinaisons candidates.

**2.** Procédé selon la revendication précédente, dans lequel l'ensemble de valeurs de tension mesurées et l'ensemble de valeurs de courant mesurées sont obtenus pendant un fonctionnement du générateur d'éolienne alors qu'il est connecté à un réseau électrique (5).

**3.** Procédé selon la revendication 1, dans lequel l'ensemble de valeurs de tension mesurées et l'ensemble de valeurs de courant mesurées sont obtenus pendant un fonctionnement du générateur d'éolienne alors qu'il est connecté à un simulateur de réseau électrique (6).

**4.** Procédé selon la revendication précédente, dans lequel le simulateur de réseau électrique sert à générer une pluralité d'harmoniques à un point de couplage entre le générateur d'éolienne et le simulateur de réseau électrique.

**5.** Procédé selon l'une quelconque des revendications précédentes, dans lequel le modèle électrique est un circuit équivalent de Thévenin (1), la valeur de paramètre de source est une tension de générateur de Thévenin ($U_{v,WEA}$), et la valeur de paramètre d'impédance est une impédance série de Thévenin ($Z_{v,WEA}$) .

**6.** Procédé selon la revendication précédente, dans lequel la valeur initiale de paramètre de source est calculée comme une valeur médiane de l'ensemble de valeurs de tension mesurées, et dans lequel la valeur initiale de paramètre d'impédance est calculée comme la somme de toutes les valeurs de tension mesurées dans l'ensemble de valeurs de tension mesurées divisée par la somme de toutes les valeurs de courant mesurées dans l'ensemble de valeurs de courant mesurées.

7. Procédé selon l'une quelconque des revendications 1 à 4, dans lequel le modèle électrique est un circuit équivalent de Norton (2), la valeur de paramètre de source est un courant de générateur de Norton ($I_{v,WEA}$), et la valeur de paramètre d'impédance est une impédance parallèle de Norton ($Z_{v,WEA}$).

8. Procédé selon l'une quelconque des revendications précédentes, dans lequel l'indice d'ajustement est indicatif de la manière dont la combinaison candidate correspondante s'ajuste bien avec les ensembles obtenus de valeurs de tension mesurées et de valeurs de courant mesurées.

9. Procédé selon l'une quelconque des revendications précédentes, dans lequel la détermination de la valeur de paramètre de source comprend

la détermination d'une valeur minimale de paramètre de source ($U_{min}$) et d'une valeur maximale de paramètre de source ($U_{max}$) dans le sous-ensemble sélectionné de combinaisons candidates, et
la détermination de la valeur de paramètre de source comme une valeur moyenne de la valeur minimale de paramètre de source et de la valeur maximale de paramètre de source.

10. Procédé selon l'une quelconque des revendications précédentes, dans lequel

la détermination de la valeur de paramètre d'impédance comprend la détermination d'une valeur minimale de paramètre d'impédance ($Z_{max}$) et d'une valeur maximale de paramètre d'impédance ($Z_{max}$) dans le sous-ensemble sélectionné de combinaisons candidates, et
la détermination de la valeur de paramètre d'impédance comme une valeur moyenne de la valeur minimale de paramètre d'impédance et de la valeur maximale de paramètre d'impédance.

11. Système pour la détermination d'une valeur de paramètre de source ($U_{v,WEA}$, $I_{v,WEA}$) et d'une valeur de paramètre d'impédance ($Z_{v,WEA}$) pour un modèle électrique (1, 2) d'un générateur d'éolienne, dans lequel le modèle électrique est représentatif d'une harmonique sélectionnée apparaissant pendant un fonctionnement du générateur d'éolienne, **caractérisé en ce que** le système comprend

une unité de mesure configurée pour obtenir un ensemble de valeurs de tension mesurées ($U_{v,NAP}$) et un ensemble de valeurs de courant mesurées ($I_{v,NAP}$) correspondant à l'harmonique sélectionnée, et
une unité de traitement configurée pour
calculer une valeur initiale de paramètre de source ($U_{v,WEA,0}$) et une valeur initiale de paramètre d'impédance ($Z_{v,WEA,0}$) sur la base de l'ensemble de valeurs de tension mesurées et de l'ensemble de valeurs de courant mesurées,
calculer un indice d'ajustement (r) respectif pour chacune d'une pluralité de combinaisons candidates de valeurs candidates de paramètre de source et de valeurs candidates de paramètre d'impédance respectives, dans lequel chaque valeur candidate de paramètre de source est obtenue comme un multiple de la valeur initiale de paramètre de source divisé par un premier nombre prédéterminé et chaque valeur candidate de paramètre d'impédance est obtenue comme un multiple de la valeur initiale de paramètre d'impédance divisé par un second nombre prédéterminé,
sélectionner un sous-ensemble des combinaisons candidates pour lesquelles l'indice d'ajustement correspondant est maximal, et
déterminer la valeur de paramètre de source ($U_{v,WEA,opt}$) et la valeur de paramètre d'impédance ($Z_{v,WEA,opt}$) sur la base du sous-ensemble sélectionné de combinaisons candidates.

12. Programme d'ordinateur comprenant des instructions exécutables par ordinateur qui, lors de leur exécution par un processeur d'ordinateur, sont conçues pour amener le processeur à réaliser le procédé selon l'une quelconque des revendications 1 à 10.

## FIG 1

## FIG 2

## FIG 3

Begin — 305

300

Obtain $U_{v, NAP}(k)$ and $I_{v, NAP}(k)$, $k=1, 2, ..., N_{tot}$ — 310

calculate initial value $U_{v, WEA, 0}$
calculate initial value $Z_{v, WEA, 0}$
$i=1$ — 315

$U_{th} = U_{v, WEA, 0} * i/100;$
$j=1$ — 320

$Z_{th} = Z_{v, WEA, 0} * j/100$ — 325

calculate fitting index r — 330

$r_{mat}(i, j) = r$ — 335

$j = j+1$ — 340

N  $j > 600$  345

Y

$i = i+1$ — 350

N  $i > 600$  355

Y

A: calculate optimum value $U_{v, WEA, opt}$
B: calculate optimum value $Z_{v, WEA, opt}$ — 360

Output $U_{v, WEA, opt}$ and $Z_{v, WEA, opt}$ — 365

End — 370

## FIG 4

330

330

$k=1; r_{sum}=0$ — 406

411

$U_{v, NAP}(k) < U_{th}$

N

Y

$(U_{v, NAP}(k) - U_{th})/Z_{th} \leq I_{v, NAP}(k) \leq (U_{v, NAP}(k) + U_{th})/Z_{th}$ — 421

N

Y

$-(U_{v, NAP}(k) - U_{th})/Z_{th} \leq I_{v, NAP}(k) \leq (U_{v, NAP}(k) + U_{th})/Z_{th}$ — 416

N

Y

$r_{sum}=r_{sum}+1$ — 426

$k=k+1$ — 431

436

$k > N_{tot}$

N

Y

$r=r_{sum}/N_{tot}$ — 441

335

## FIG 5

360A

360

$k=1; r_{max}=0$ — 507

$r_{opt}(k) = max\{r_{mat}(k, 1), r_{mat}(k, 2), ..., r_{mat}(k, 600)\}$ — 512

517

$r_{opt}(k) > r_{max}$   N   Y

527

$r_{opt}(k) = r_{max}$   N   Y

$U_{min} = U_{v, WEA, 0}*k/100;$
$r_{max} = r_{opt}(k)$ — 522

$U_{max} = U_{v, WEA, 0}*k/100$ — 532

$k=k+1$ — 537

542

$k>600$   N   Y

$U_{v, WEA, opt} = (U_{max}+U_{min})/2$ — 547

365

# FIG 6

360B

360

$k=1; r_{max}=0$ — 608

$r_{opt}(k)=\max\{r_{mat}(1, k), r_{mat}(2, k), ..., r_{mat}(600, k)\}$ — 613

618

$r_{opt}(k)>r_{max}$ — N

628

$r_{opt}(k)=r_{max}$ — N

$Z_{min}=Z_{v, WEA, 0}*k/100;$
$r_{max}=r_{opt}(k)$ — 623

$Z_{max}=Z_{v, WEA, 0}*k/100;$ — 633

$k=k+1$ — 638

643

$k>600$ — N

$Z_{v, WEA, opt}=(Z_{max}+Z_{min})/2$ — 648

365

FIG 7

FIG 8

**EP 3 954 013 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104362628